(19)

**Europäisches Patentamt**

**European Patent Office**

**Office européen des brevets**

(11) **EP 4 686 140 A1**

(12) **EUROPEAN PATENT APPLICATION**

(43) Date of publication:
28.01.2026 Bulletin 2026/05

(21) Application number: 24190968.8

(22) Date of filing: 25.07.2024

(51) International Patent Classification (IPC):
*H04L 9/08* (2006.01)

(52) Cooperative Patent Classification (CPC):
H04L 9/0852

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Deutsche Telekom AG**
**53113 Bonn (DE)**

(72) Inventors:
• **Ribeiro Sena, Matheus**
**14129 Berlin (DE)**

• **Geitz, Marc**
**58089 Hagen (DE)**
• **Braun, Ralf-Peter**
**12305 Berlin (DE)**

(74) Representative: **2SPL Patentanwälte PartG mbB**
**Landaubogen 3**
**81373 München (DE)**

Remarks:
Amended claims in accordance with Rule 137(2) EPC.

(54) **NODE FOR A QUANTUM KEY DISTRIBUTION NETWORK AND CORRESPONDING METHOD AND SYSTEM OF NODES**

(57)     Various examples of the present disclosure relate to a node and method for a node of a quantum key distribution network, and to a corresponding system comprising the nodes of the quantum key distribution network, and in particular to an establishment of secret keys in a quantum key distribution network using two different modulation modalities. Thenode (Alice, Charlie 1, Charlie 2, Bob) comprises first modulation circuitry (4) for modulating qubits using a first modulation modality, second modulation circuitry (10) for modulating the qubits using a second modulation modality, and control circuitry (5, 6, 7, 11) configured to control the first modulation circuitry and the second modulation circuitry to modulate a sequence of qubits being transmitted from a transmitter node to a receiver node via one or more intermediate nodes of the quantum key distribution network based on at least one bit sequence, wherein the control circuitry is configured to determine a shared secret between the node and a second node of the quantum key distribution network based on the at least one bit sequence.

Fig. 3

**Description**

Various examples of the present disclosure relate to a node for a quantum key distribution network, to a method for a node of a quantum key distribution network, and to a corresponding system comprising the nodes of the quantum key distribution network, and in particular to an establishment of secret keys in a quantum key distribution network using two different modulation modalities.

Quantum key distribution (QKD), e.g., as discussed in C. H. Bennett and G. Brassard, "Quantum cryptography: Public key distribution and coin tossing," (Proceedings of IEEE International Conference on Computers, Systems and Signal Processing, vol. 175, pp. 8, 1984) is a method of secure communication that uses quantum mechanics to distribute cryptographic keys between two parties in a way that is provably secure against eavesdropping. By leveraging the principles of quantum mechanics, QKD allows two parties to generate a shared secret key that is theoretically impossible for an eavesdropper to intercept without being detected. In QKD, the sender (Alice) and receiver (Bob) use the properties of quantum particles, such as photons, to exchange information securely. Any attempt by an eavesdropper (Eve) to intercept the quantum particles will disturb their quantum state, alerting Alice and Bob to the presence of the eavesdropper. QKD is considered a highly secure method of key distribution and is often used to establish a secure channel for encrypting communications in fields such as critical infrastructure, government communications, and financial transactions.

The Qline is a quantum key distribution (QKD) network architecture that can exchange quantum secure key material along a single quantum channel. The Qline consists of a transmitter (Alice), a receiver (Bob) and a series of intermediate QKD nodes (Charlies) (see M. Doosti et al. "Establishing shared secret keys on quantum line networks: protocol and security." arXiv preprint arXiv:2304.01881 (2023)). All nodes can randomly change the phase of the weak laser signal using timebin encoding and exchange cryptographic keys in pairs using a classic key sifting protocol.

There may be a desire for providing an improved concept for quantum key distribution, in particular a quantum key distribution using the Qline network architecture.

This desire is addressed by the subject-matter of the independent claims.

Various examples of the present disclosure are based on the finding, that the Qline protocol currently operates in a pairwise manner, where only two partners within the Qline exchange public keys at a time. However, this approach presents challenges, particularly in the inefficient utilization of the optical infrastructure, meaning that the quantum channel (optical fiber) is exclusively used by a pair of players to exchange keys at a time. This inefficiency arises from the protocol's reliance on solely using timebin-encoded qubits. To address this limitation, an extension to the Qline protocol is proposed. This enhancement involves modulating the qubits using two different modulation modalities, such as timebin and polarization encoding. By incorporating this dual modulation technique, the protocol enables two arbitrary pairs to exchange keys simultaneously, significantly enhancing the efficiency of the optical infrastructure utilization. Alternatively, instead of enabling two arbitrary pairs to exchange keys simultaneously, the dual modulation technique can be used to speed up key establishment between two partners by using both modulations for the key establishment between the two partners.

A first aspect of the present disclosure relates to a node for a quantum key distribution network. The quantum key distribution network comprises a transmitter node (Alice), one or more intermediate nodes (Charlies) and a receiver node (Bob). For example, the quantum key distribution network may be a quantum key distribution network according to the Qline protocol. The node comprises first modulation circuitry for modulating qubits using a first modulation modality. The node comprises second modulation circuitry for modulating the qubits using a second modulation modality. The node comprises control circuitry configured to control the first modulation circuitry and the second modulation circuitry to modulate a sequence of qubits being transmitted from the transmitter node to the receiver node via the one or more intermediate nodes of the quantum key distribution network based on at least one bit sequence. The control circuitry is configured to determine a shared secret between the node and a second node, i.e., a secret that is shared between the node and the second node, of the quantum key distribution network based on the at least one bit sequence. In the present disclosure, the term "determining/establishing a shared secret" refers to the operation of using the at least one bit sequence of the node and the bit sequences (or portions thereof) shared by other nodes to calculate the shared secret of the respective other node, i.e., the second node. By using two different pieces of modulation circuitry to modulate the same sequence of qubits using two different modulation modalities, a simultaneous establishment of shared secrets between two pairs of nodes can be enabled, or an establishment of a shared secret between two nodes can be sped up, as basis matching can be performed on both modulation modalities simultaneously.

Preferably, the proposed concept may be used to enable simultaneous establishment of shared secrets between two pairs of nodes at a time. This can be done by using different bit sequences for controlling the two different modulation modalities. For example, the control circuitry may be configured to control the first modulation circuitry to modulate the sequence of qubits based on a first bit sequence or first set of bit sequences and to control the second modulation circuitry to modulate the sequence of qubits based on a second bit sequence or second set of bit sequences being different from the first bit sequence or first set of bit sequences. The control circuitry may be configured to determine the shared secret between the node and the other node (either) based on the first bit sequence or first set of bit sequences or based on the second bit sequence or second set of bit sequences. This way, one of the bit sequences (or sets of bit sequences) can be used for establishing a shared secret between a first and a second node, and the other bit sequence or set of bit sequences can be used for establishing a second shared secret between a third and fourth node. Alternatively, different bit sequences may also be used to establish a shared secret between the same pair of nodes (by combining the bits for which the respective basis matching condition is met in a pre-defined order).

Alternatively, the same bit sequence or set of bit sequences may be used for both modulation modalities. For example, the control circuitry may be configured to control the first modulation circuitry and the second modulation sequence to modulate the sequence of qubits based on the same bit sequence or same set of bit sequences. This way, both modulation modalities can be used to establish a shared secret between the same pair of nodes, decreasing the number of qubits required to arrive at a pre-defined number of qubits measured using a matching measuring basis.

In some protocols, e.g., the Qline protocol, two bit sequences are used for modulating using a given modulation modality, a public bit sequence that can be shared with every other node, and a private bit sequence that is kept private to the respective node, and that can be deduced by the respective other node with which the shared secret is established. Accordingly, the control circuitry may be configured to control the first modulation circuitry and the second modulation circuitry to modulate the sequence of qubits based on at least one set of bit sequences. For example, each set of bit sequences may comprise a private bit sequence being private to the node and a public bit sequence being shared with the other nodes. This way, the proposed concept can be used with these types of QKD protocols.

To determine the shared secret, the node needs to be aware of the bit sequences being used by the other nodes. If the node knows its own bit sequences, the public bit sequence of the remaining nodes and the secret bit sequences or sifted keys of the nodes other than the second node (or rather the bits of the respective bit sequences which have been measured using a matching basis), it can deduce the secret bit sequence or sifted key of the second node. Thus, the control circuitry may be configured to determine the shared secret between the node and the second node based on the public bit sequences of the other nodes of the quantum key distribution network. As the other nodes are not aware of the secret bit sequence of the node, they are unable to deduce the secret bit sequence of the node or the second node. For this reason, a shared secret can be established.

To share the public bit sequences and the private bit sequences of the other nodes (except the node and the second node), a non-quantum (i.e., conventional) side-channel may be used. In other words, the control circuitry may be configured to obtain bit sequences from other nodes of the quantum key distribution via a non-quantum communication channel, and to determine the shared secret based on the bit sequences obtained from the other nodes. This way, the complex transmission via the quantum channel can be avoided. As the bit sequences being publicly shared are of no use for an eavesdropper, sharing them via the non-quantum channel does not decrease the security of the shared secret.

To calculate (i.e., deduce) the shared secret, the respective nodes establishing the secret key may need to be aware of the bits being measured by the receiver node, e.g., which bits have been successfully measured (using the matching basis), and optionally their measured value. Accordingly, the control circuitry may be configured to obtain information on the qubits having been measured using a matching measuring basis from the receiver node via the non-quantum communication channel, and to determine the shared secret based on the information on the qubits having been measured using a matching measuring basis.

For example, the first modulation modality may be time-bin modulation and the second modulation modality may be polarization modulation. These types of modulation can be applied to qubits independently of each other.

The proposed concept may be used by each of the nodes of the quantum key distribution network. For example, the node may be an intermediate node (i.e., a Charlie) of the quantum key distribution network. As intermediate node, the proposed modulation scheme is applied without measuring the signal - the intermediate nodes merely change the modulation state, without measuring the qubits. In other words, the intermediate node may be configured to modulate the qubits as the qubits are transmitted from the transmitter node to the receiver node without measuring the qubits. This way, the intermediate nodes can be implemented at a low complexity.

The proposed concept may also be used by the transmitter node (i.e., Alice). In other words, the node may be the transmitter node of the quantum key distribution network. In this case, the node may comprise qubit generation circuitry to generate the sequence of qubits.

Finally, the proposed concept may be used by the receiver node (i.e., Bob). In other words, the node may be the receiver node of the quantum key distribution network. In this case, the node may comprise measuring circuitry for measuring the sequence of qubits according to the two modulation modalities.

The receiver node may share some additional information with the other nodes, in particular which qubits have been measured and successfully (i.e., conclusively) decoded using the respective modulation modality. For example, the control circuitry may be configured to control the measuring circuitry to measure the sequence of qubits according to a first measuring basis for the first measuring modality and according to a second measuring basis for the second measuring modality. Qubits measured according to a measuring basis that matches a basis of the respective measuring modality may contribute to at least one output bit sequence of the receiver node. For example, the control circuitry may be configured to provide information on the qubits having been measured using a matching measuring basis to the other nodes of the quantum key distribution network. For example, the control circuitry may be configured to use the information on the qubits having been measured using a matching measuring basis to determine the shared secret. As, in quantum communication, qubits that have not been measured using a matching measuring basis cannot be measured conclusively, such qubits are discarded. Only bits that are measured using a matching measuring basis are used. For example, if the same sequences of bits are used for both modulation modalities, bits may be used that have been conclusively measured (i.e., measured using the matching measuring basis) using either (or both) modulation modalities. If different sequences of bits are used, each measuring modality may be considered separately.

In some examples, the control circuitry may be configured to determine the shared secret based on the at least one output bit sequence. This way, additional information shared by the different nodes may be used for determining the shared secret.

Another aspect of the present disclosure relates to a system comprising a plurality of nodes as described above. One of the nodes is a transmitter node, one of the nodes is a receiver node and one or more nodes are intermediate nodes of the quantum key distribution network. The transmitter node is configured to transmit a sequence of qubits to the receiver node via the one or more intermediate nodes of the quantum key distribution network, and the nodes are configured to modulate the sequence of qubits using two modulation modalities. This way, shared secrets may be established between pairs of nodes of the system.

In particular, the nodes may be configured to use the two modulation modalities to simultaneously and independently of each other establish shared secrets between two sets of nodes at a time. This way, the establishment of multiple shared secrets can be sped up, as the shared secrets are established independently of each other. This can increase the overall key rate per unit of time. Moreover, the utilization of the channel (e.g., the fiber-optic channel) is improved.

Alternatively, the nodes may be configured to use the two modulation modalities to establish a single shared secret between two nodes at a time. The two modulation modalities may be used to decrease a number of qubits required to arrive at a pre-defined number of qubits measured using a matching measuring basis. This way, individual shared secrets can be established in a shorter time. Moreover, the utilization of the channel (e.g., the fiber-optic channel) is improved.

Another aspect of the present disclosure relates to a method for a node of a quantum key distribution network. The quantum key distribution network comprises a transmitter node, one or more intermediate nodes and a receiver node. The method comprises modulating a sequence of qubits being transmitted from the transmitter node to the receiver node via the one or more intermediate nodes of the quantum key distribution network using a first modulation modality and a second modulation modality based on at least one bit sequence. The method comprises determining a shared secret between the node and a second node of the quantum key distribution network based on the at least one bit sequence. For example, the method may comprise one or more additional features as discussed in connection with the node discussed above.

There are several ways how to design and further develop the teaching of the present invention in an advantageous way. To this end, it is to be referred to the patent claims subordinate to patent claim 1 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawing

Fig. 1a        shows a schematic diagram of an amplitude modulator;

Fig. 1b        shows a schematic diagram of a Mach-Zehnder interferometer;

Fig. 2a to 2e  show schematic diagrams of a Qline quantum key distribution network with four nodes, illustrating how a shared secret is established among the nodes of the Qline system;

Fig. 3         shows a schematic diagram of a quantum key distribution network with four nodes;

Fig. 4         illustrates the simultaneous use of two modulation modalities for independently generating two secret keys; and

Fig. 5         shows a flow chart of a method for a node of a quantum key distribution network.

The present disclosure is based on the simultaneous use of multiple modulation modalities for modulating a qubit for the purpose of establishing a shared secret. For example, as will become evident in the following, timebin encoding/modulation and polarization encoding/modulation may be used for this purpose. In the following, a short introduction is given on both.

The generation of timebin qubits involves encoding quantum information in the temporal degree of freedom of photons. In this approach, qubits are represented by different time bins within a single photon pulse, where each timebin, usually $|S\rangle$ (short) and $|L\rangle$ (long), corresponds to a quantum state. Timebin qubits offer advantages in terms of robustness against polarization rotation and can be efficiently manipulated using optical elements such as phase modulators and delay lines. The formula for a timebin qubit can be represented as

$$|\psi\rangle = \rho_1|S\rangle + \rho_2|L\rangle \qquad (1)$$

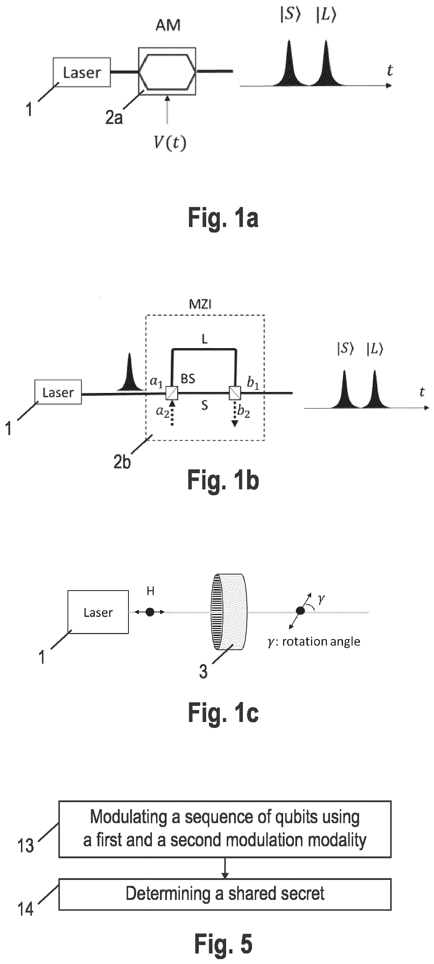

where $\rho_1$ and $\rho_2$ are complex numbers. Timebin-encoded qubits can be generated using amplitude modulators (AMs, Fig. 1a) or Mach-Zehnder interferometers (MZIs, Fig. 1b). When using an AM, a laser generates a weak continuous wave (CW) signal that is modulated/sliced by an electrical signal $V(t)$, thus generating two timebin pulses, a $|S\rangle$ short and a $|L\rangle$ long. When using an MZI, a pulsed laser generates a single photon ($\approx$ photon/pulse) that is split by a beam splitter (BS). The outputs of the BS are connected to a short (S) and a long (L) path, leading to an interference pattern that consists of two pulses at the outputs of the MZI's second BS, i.e., a $|S\rangle$ short and a $|L\rangle$ long state.

Figs. 1a and 1b show example setups for generation of timebin-encoded qubits using an a) AM or an b) MZI. $a_{1,2}$: inputs of the MZI. $b_{1,2}$: outputs of the MZI. Fig. 1a therefore shows a schematic diagram of an amplitude modulator (AM) 2a for generating a timebin-encoded qubit based on a laser pulse generated by a pulsed laser 1, and Fig. 1b shows a schematic diagram of a Mach-Zehnder interferometer 2b for generating a timebin-encoded qubit based on a laser pulse generated by a pulsed laser 1.

In the timebin-encoding, information is transported in the phase ($\phi$) of the $|L\rangle$ long state. To encode such information, phase modulators (PMs) are usually applied. This leads to the final state:

$$|\psi\rangle = |S\rangle + e^{j\phi}|L\rangle. \qquad (2)$$

Polarization encoded qubits utilize the polarization states of photons to represent quantum information. In this scheme, the horizontal ($|H\rangle$) and vertical ($|V\rangle$) polarization states of a photon are used to encode the binary values 0 and 1 (in the linear basis), respectively. This method is advantageous because it allows for robust and high-fidelity transmission of quantum information over optical fibers and through free space. Polarization encoding is widely used in QKD protocols, as it enables efficient manipulation and measurement of qubits using PBS, waveplates, and single photon detectors. The formula for a polarization-encoded qubit can be represented as

$$|\psi\rangle = \varepsilon_1|H\rangle + \varepsilon_2|V\rangle, \qquad (3)$$

where $\varepsilon_1$ and $\varepsilon_2$ are complex numbers. Polarization-encoded qubits can be generated using waveplates that function as polarization controllers (Fig. 1c). Fig. 1c shows a schematic diagram of a waveplate 3 that is used to adjust the polarization of qubit generated using a pulsed laser 1. A half waveplate (HWP), for instance, rotates the polarization direction of linearly polarized light (H in Figure 1c), thus yielding different polarization states, such as, horizontal ($|H\rangle$), vertical ($|V\rangle$), diagonal ($|D\rangle$) or anti-diagonal ($|A\rangle$) according to the orientation of the waveplate. As shown in Fig. 1c, the polarization direction of a photon can be rotated by an angle $\gamma$ according to the orientation of the HWP, generating different polarization states.

Some advantages of using polarization encoding over timebin encoding include the ease with which it can be manipulated using waveplates and filters, and its efficient storage in quantum memories. However, in optical fiber communications, polarization encoding requires additional calibration schemes because single-mode optical fibers can rotate the polarization states, whereas this is not a critical problem for timebin encoding.

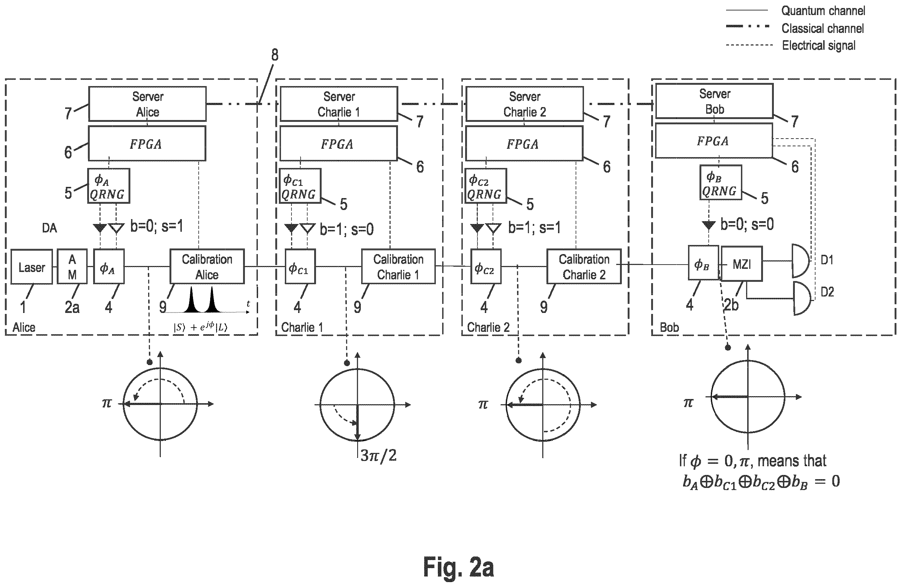

In the conventional Qline protocol, only timebin encoding is used for the establishment of secrets among the nodes of the Qline system. An example of the Qline protocol being implemented using only timebin encoding is shown in connection with Figs. 2a to 2e. Figs. 2a to 2e show schematic diagrams of a Qline system with four nodes, Alice (the transmitter node), Charlie 1 and Charlie 2 (two intermediate nodes), and Bob (the receiver node). Each of the nodes includes a phase modulator 4, a Quantum Random Number Generator QRNG 5, a Field-Programmable Gate Array (FPGA) 6, and a server 7. The servers 7 of the nodes are connected via a classical/conventional channel 8, e.g., via Ethernet or via the internet. The Alice node and the Charlie nodes further include a calibration device 9 being used to pre-adjust the laser signal prior to transmission to the respective subsequent node. The server 7, the FPGA 6, the QRNG 5 and the calibration device 9 are connected via electrical signals. The Alice node further includes a pulsed laser 1 and an Amplitude Modulator 2a to generate the timebin-encoded qubits. Alice initiates the Qline process by generating a weak laser pulse with horizontal polarization. In general, the weak laser pulse comprises a small number of photons, which form the qubit. This pulse undergoes amplitude modulation within an AM 2a, resulting in the creation of the qubit

$$\psi_{AM} = \frac{1}{\sqrt{2}}(|S\rangle + |L\rangle)$$

. Subsequently, the qubit proceeds to Alice's phase modulator 4 ($\Phi_A$), where its state

transforms to $\psi_A = \frac{1}{\sqrt{2}}\left(|S\rangle + e^{j\phi_A}|L\rangle\right)$ controlled by the phase modulation parameter $\phi_A$. The phase modulation is regulated by the QRNG 6, supplying two analog electrical signals for amplification via two DAs. The first DA amplifies the random binary bit $b_A$ (representing the timebin basis), whereas the second DA amplifies the random binary bit $s_A$ (representing the timebin symbol), such that the relation between $b_A$ and $s_A$ and $\phi_A$ is:

$$\phi_A = \pi(b_A/2 + s_A).$$

As can be seen, $\phi_A$ can assume the following values: 0, $\pi/2$, $\pi$ or $3\pi/2$.

Following phase/timebin modulation, the resulting qubit undergoes further manipulation in Alice's calibration box 9, designed to pre-compensate for any undesired polarization rotations that may occur within the quantum channel (optical fiber). This box performs any necessary polarization rotations such to guarantee that the next player receives the exact $\psi_{\theta A}$. This calibration can be performed offline. Once calibrated, the qubit is then transmitted to Charlie 1 to continue its trajectory within the Qline.

Within Charlie 1, the phase is shifted again. At the output of Charlie 1's polarization controller, the qubit can be

described as $\psi_{C1} = \frac{1}{\sqrt{2}}\left(|S\rangle + e^{j(\phi_A + \phi_{C1})}|L\rangle\right)$, where, analogously to Alice, $\phi_{C1} = \pi\left(\frac{b_{C1}}{2} + s_{C1}\right)$.

The same logic is applied to Charlie 2, that is, at the output of Charlie 2's polarization controller, the qubit can be described as $\psi_{C2} = \frac{1}{\sqrt{2}}\left(|S\rangle + e^{j(\phi_A + \phi_{C1} + \phi_{C2})}|L\rangle\right)$.

Upon reaching Bob, the qubit undergoes basis selection before its final measurement is executed. To perform this selection, the qubit is fed to a phase shifter $\phi_B$. This phase shift is set to either 0 or $\frac{\pi}{2}$, that is $\phi_B = \pi\left(\frac{b_B}{2}\right)$ where $b_{t,B}$ is a binary random bit. At this point, the qubit can be described as $\psi_B = \frac{1}{\sqrt{2}}\left(|S\rangle + e^{j(\phi_A + \phi_{C1} + \phi_{C2} + \phi_B)}|L\rangle\right)$.

The qubit $\psi_B$ is fed to a Mach-Zehnder interferometer (MZI) 2b of the Bob node. At the output I and II of the MZI (Figure 1), the $|S\rangle$ and the $|L\rangle$ timebins interfere. The detection probability at the output ports I and II are, respectively,

$$I_1 = \sin^2\left(\frac{\phi_A + \phi_{C1} + \phi_{C2} + \phi_B}{2}\right) \text{ and } I_2 = \cos^2\left(\frac{\phi_A + \phi_{C1} + \phi_{C2} + \phi_B}{2}\right).$$

If $b_A \oplus b_{C1} \oplus b_{C2} \oplus b_B \neq 0$ ($\oplus$: exclusive or), it means that $\phi_A + \phi_{C1} + \phi_{C2} + \phi_B$ can be expressed as $n\pi/2$, where $n$ is an odd number. Then, $I_1 = I_2 = 1/2$, resulting in inconclusive measurements, i.e., it is not possible to determine with 100% probability if the photons (weak pulse) exclusively leave port I or port II. If $b_A \oplus b_{C1} \oplus b_{C2} \oplus b_B = 0$, it means that $\phi_A + \phi_{C1} + \phi_{C2} + \phi_B$ can be expressed as $n\pi/2$, where $n$ is an even number. Then, $I_1 = 0$ or 1 and $I_2 = 1$ *or* 0, resulting in conclusive measurements. Therefore, the qubit exclusively leaves the MZI through output port I ($I_1 = 1$, $I_2 = 0$) or through output port II ($I1 = 0$, $I_2 = 1$). Depending on which port the qubit leaves through, it is then measured by detector D1 or D2. The detectors D1, D2 and connected to Bob's FPGA 6 using electrical signals. The FPGA 6 performs the measurements using the detectors D1 and D2, and determines the respective counts of photons detected by detector D1 and D2, respectively.

According to the original Qline protocol, only the cases when there is a basis matching, i.e., $b_A \oplus b_{C1} \oplus b_{C2} \oplus b_B = 0$, are used for the sifting the key. Then, for two parties to establish a shared key, it suffices for the other two to disclose their keys. For example, when Charlie 2 intends to uncover Alice's secret key, Charlie 1 and Bob are required to reveal their secret keys, respectively.

This process is shown in Figs. 2a to 2e. In the example of Figs. 2a to 2e, the values generated by the respective QRNGs 5 are $b_A = 0$, $s_A = 1$, $b_{C1} = 1$, $s_{C1} = 0$, $b_{C2} = 1$, $s_{C2} = 1$, $b_B = 0$ and $s_B = 0$. Consequently, the phase of the timebin-encoded qubit is shifted by $\phi_A = \pi$ by Alice's phase modulator 4 (based on $b_A = 0$, $s_A = 1$, where $\phi_A = b_A \cdot \frac{\pi}{2} + s_A \cdot \pi)$, by $\phi_{C1} = \frac{\pi}{2}$ by Charlie 1's phase modulator 4, by $\phi_{C2} = \frac{3}{2}\pi$ and by $\phi_B = 0$ by Bob's phase modulator 4. The resulting signal has a phase that is modulated by $3\pi \approx \pi$. If $\phi = 0, \pi$, then $b_A \oplus b_{C1} \oplus b_{C2} \oplus b_B = 0$, i.e., the correct measurement basis has been used.

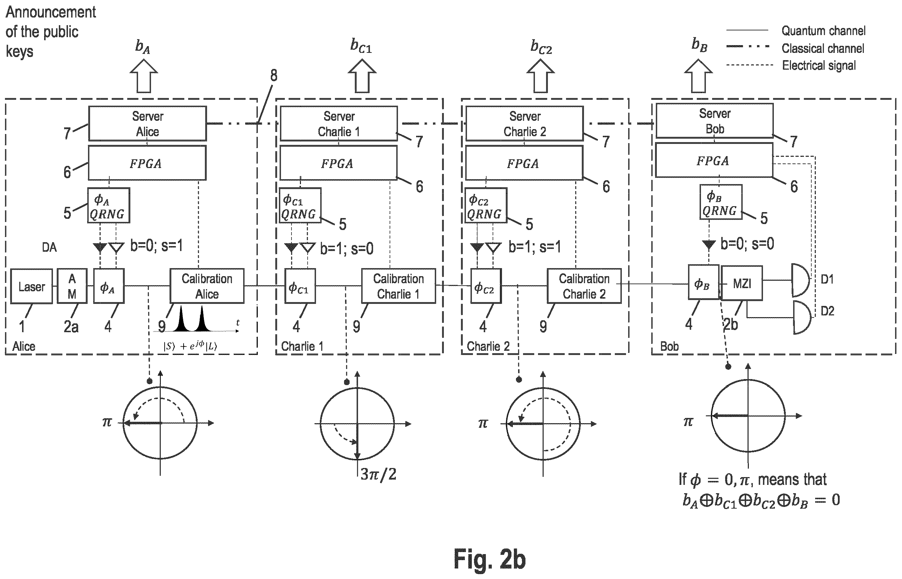

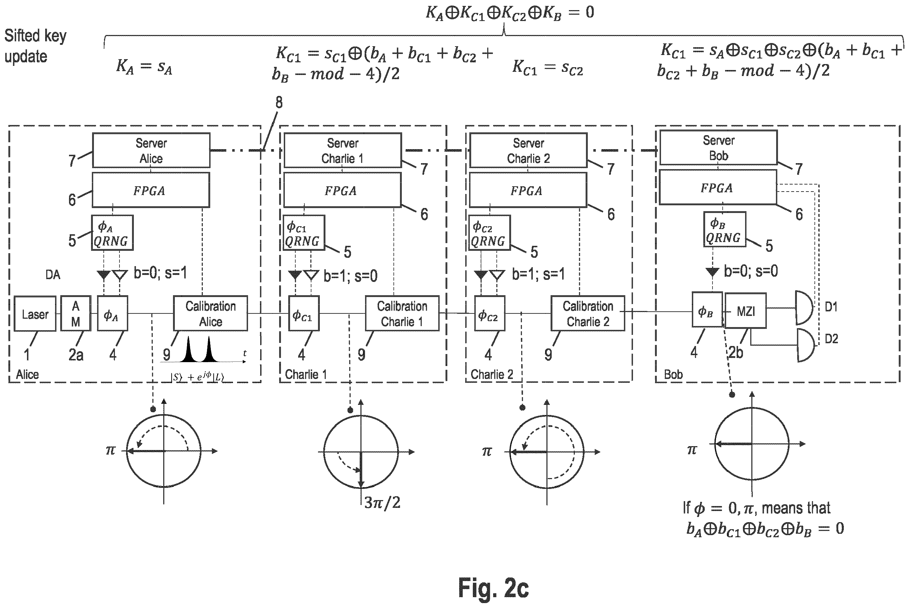

In Fig. 2b, the public keys $b_A$, $b_{C1}$, $b_{C2}$ and $b_B$ are announced by the respective nodes (over the classical channel). In Fig. 2c, the sifted keys $K_A$, $K_{C1}$, $K_{C2}$ and $K_B$ are updated, under the assumption that $K_A \oplus K_{C1} \oplus K_{C2} \oplus K_B = 0$. In particular, $K_A = S_A$, $K_{C1} = s_{C1} \oplus (b_A + b_{C1} + b_{C2} + b_B - mod - 4)/2$, $K_{C1} = s_{c2}$ and $K_B = s_A \oplus s_{C1} \oplus s_{C2} \oplus (b_A + b_{C1} + b_{C2} + b_B - mod - 4)/2$.

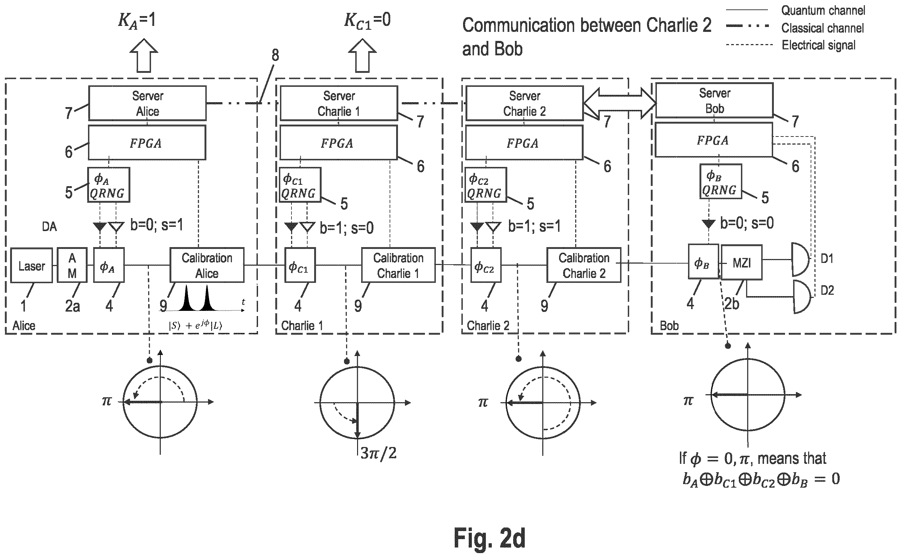

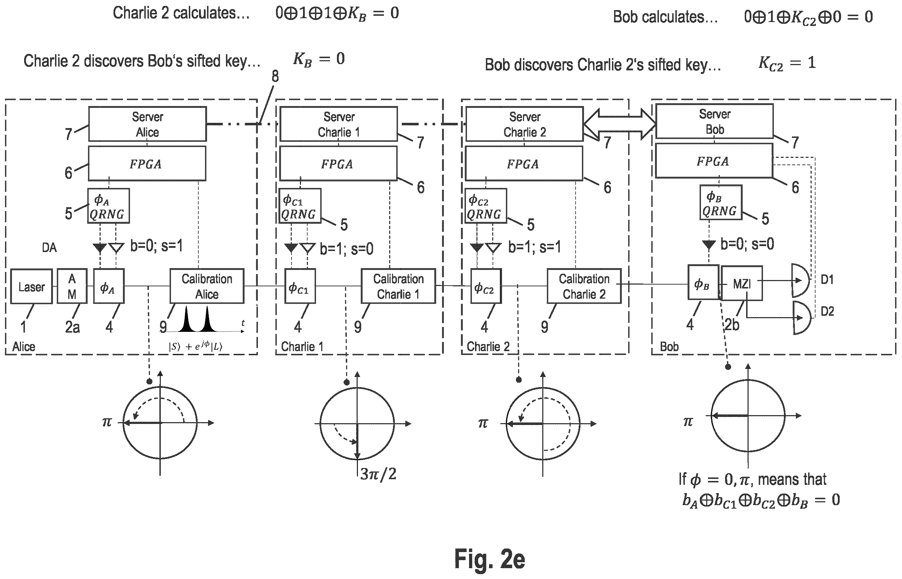

In Fig. 2d, it is assumed that a secret key is to be established for the communication between Charlie 2 and Bob. For this reason, Alice and Charlie 1 disclose their sifted keys $K_A = 1$ and $K_{C1} = 0$. In Fig. 2e, it is shown that Charlie 2 calculates $0 \oplus 1 \oplus 1 K_B = 0$ and thus discovers Bob's sifted key $K_B = 0$. Similarly, Bob calculates $0 \oplus 1 \oplus K_{C2} \oplus 0 = 0$ and thus discovers Charlie 2's sifted key $K_{C2} = 1$.

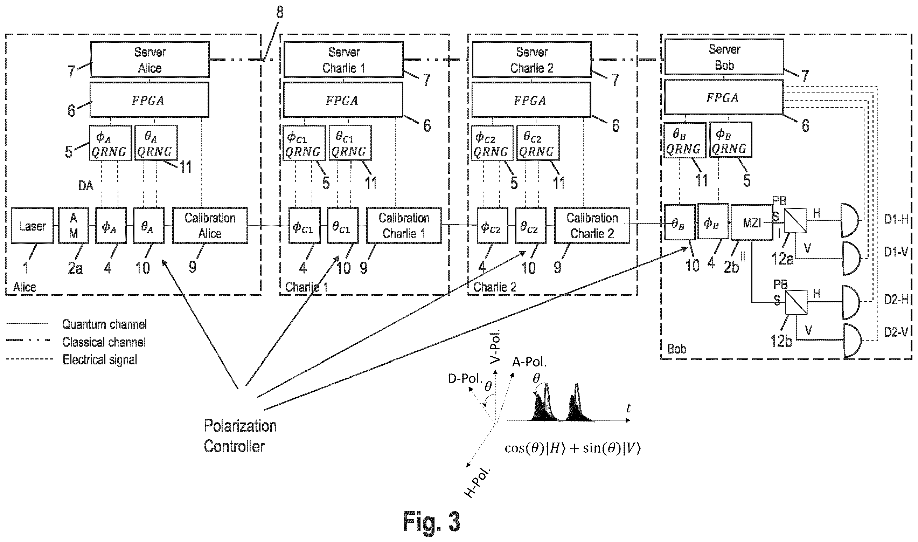

In the proposed concept, QKD protocols such as the Qline protocol are extended to use two different modulation modalities instead of a single one. The setup for the proposed concept is depicted in Fig. 3.

Fig. 3 shows a schematic diagram of a quantum key distribution network with four nodes, Alice (the transmitter node), Charlie 1 and Charlie 2 (two intermediate nodes), and Bob (the receiver node). Each of the nodes includes a phase modulator 4, a Quantum Random Number Generator (QRNG) 5, a Field-Programmable Gate Array (FPGA) 6, and a server 7. The servers 7 of the nodes are connected via a classical/conventional channel, e.g., via Ethernet, via a fiber-based channel (e.g., Ethernet over fiber), or via the internet. The Alice node and the Charlie nodes further include a calibration device 9 being used to pre-adjust the laser signal prior to transmission to the respective subsequent node. The server 7, the FPGA 6, the QRNG 5 and the calibration device 9 are connected via electrical signals. The Alice node further includes a pulsed laser 1 and an Amplitude Modulator 2a to generate the timebin-encoded qubits. Thus, the transmitter node (Alice) comprises qubit generation circuitry (the laser 1 and the AM 2a or an MZI) to generate the sequence of qubits.

In the proposed concept, two different modulation modalities are used. For this reason, the nodes (Alice, Charlie 1, Charlie 2, and Bob) further include a polarization controller 10 ($\phi_A$), which is being controlled by a further QRNG 11. Thus, the nodes have first modulation circuitry (the phase modulator 4) for modulating qubits using a first modulation modality (timebin encoding/modulation), and second modulation circuitry (the polarization controller 10) for modulating the qubits using a second modulation modality (polarization encoding/modulation). The transmitter node transmits a sequence of qubits to the receiver node via the one or more intermediate nodes of the quantum key distribution network, with the nodes being configured to modulate the sequence of qubits using two modulation modalities. In particular, the intermediate nodes modulate the qubits as the qubits are transmitted from the transmitter node to the receiver node without measuring the qubits.

The nodes further comprise control circuitry (e.g., the server 7, the FPGAs 6 and the QRNGs 5, 10) configured to control the first modulation circuitry and the second modulation circuitry to modulate a sequence of qubits being transmitted from the transmitter node to the receiver node via the one or more intermediate nodes of the quantum key distribution network based on at least one bit sequence. The control circuitry is configured to determine a shared secret between the respective node and a second node, such as a sifted key of the respective other node, of the quantum key distribution network based on the at least one bit sequence.

In the example shown in Fig. 3, the qubit is independently modulated in the phase (timebin encoding) and in the polarization (polarization encoding). In comparison to the previous design of a Qline, discussed in connection with Figs. 2a to 2e, each Qline box (node) is now additionally equipped with a quantum random number generator (QRNG) 11 that generates binary bits responsible for the polarization modulation scheme. In Fig. 3, this is indicated by $\theta_p$ QRNG 11, where $p$ is the index of the player. The respective nodes further include the polarization controller 10 that receives the amplified signals from driver amplifiers (DAs), consequently fed by the $\theta_p$ QRNG 11 and applies a rotation onto the incoming qubit. In Fig. 3, this is indicated by $\theta_p$ 10, where $p$ is the index of the player.

In comparison to the previous design of a Qline, Bob is now equipped with two polarization beam splitters (PBSs) 12a, 12b, and four single photon detectors (D1/2-H/V), which are an example of measuring circuitry for measuring the sequence of qubits according to the two modulation modalities. The four single photon detectors are connected to FPGA 6 using electrical signals. Similar to Figs. 2a to 2e, FPGA 6 performs the measurements using the detectors D1-H, D1-V, D2-H and D2-V, and determines the respective counts of photons detected by the respective detectors. The role of the newly added polarization controller is to rotate the polarization of the photonic qubit and explore this degree of freedom for modulation purposes. In the original Qline scheme, the polarization is not used for modulation. Now, the Qline protocol is carried out in the timebin as well as in the polarization domain.

As in the conventional Qline process, Alice initiates the Qline process by generating a weak laser pulse with horizontal polarization. This pulse undergoes amplitude modulation within an AM 2a, resulting in the creation of the qubit

$$\psi_{AM} = \frac{1}{\sqrt{2}}(|S\rangle + |L\rangle)$$

.

Subsequently, the qubit proceeds to Alice's phase modulator 2a ($\phi_A$), where its state transforms to

$$\frac{1}{\sqrt{2}}\left(|S\rangle + e^{j\phi_A}|L\rangle\right)$$

controlled by the phase modulation parameter $\phi_A$. The phase modulation is regulated by a QRNG 5, supplying two analog electrical signals for amplification via two DAs. The first DA amplifies the random binary bit $b_{t,A}$ (representing the timebin basis), whereas the second DA amplifies the random binary bit $s_{t,A}$ (representing the timebin symbol), such that the relation between $b_{t,A}$ and $s_{t,A}$ and $\phi_A$ is:

$$\phi_A = \pi\left(b_{t,A}/2 + s_{t,A}\right).$$

As can be seen, $\phi_A$ can assume the following values: 0, $\pi/2$, $\pi$ or $3\pi/2$.

Following the phase modulation, the qubit undergoes polarization modulation, achieved through a polarization controller 10 denoted as $\theta_A$, responsible for rotating the polarization. The polarization rotation scheme is analogous to the phase modulation applied earlier. Two random binary bits, denoted as $b_{p,A}$ (representing the polarization basis) and $s_{p,A}$ (representing the polarization symbol), generated by QRNG 11, are amplified by two DAs. The mathematical relationship governing the rotation angle, $\theta_A$, and the binary bits $b_{p,A}$ and $s_{p,A}$ is described as:

$$\theta_A = \pi/2\left(b_{p,A}/2 + s_{p,A}\right). \tag{5}$$

As can be seen, $\theta_A$ can assume the following values: 0, $\pi/4$, $\pi/2$, or $3\pi/4$. At the output of the polarization controller, the qubit can be described as:

$$\psi_{\theta_A} = \left[\!\left[\frac{1}{\sqrt{2}}\left(|S\rangle + e^{j\phi_A}|L\rangle\right)\right]\!\right] \cup \left[\!\left[\left(\cos(\theta_A)|H\rangle + \sin(\theta_A)|V\rangle\right)\right]\!\right] \tag{6}$$

where u denotes the multiplexing of the timebin encoding (left term) and polarization encoding (right term) to the generated qubit. Here, it is important to highlight that the timebin and the polarization modulation are treated independently from each other.

In the example of Fig. 3, as in the example of Figs. 2a to 2e, each node uses at least one set of bit sequences, a first set comprising the bit sequences $b_{t,[A,C1,C2,B]}$ and $s_{t,[A,C1,C2,B]}$ and a second set comprising the bit sequences $b_{p,[A,C1,C2,B]}$ and $s_{p,[A,C1,C2,B]}$. Thus, the control circuitry may be configured to control the first modulation circuitry and the second modulation circuitry to modulate the sequence of qubits based on at least one set of bit sequences, with each set of bit sequences comprising a private bit sequence ($s_{t,[A,C1,C2,B]}$ or $s_{p,[A,C1,C2,B]}$) being private to the node and a public bit sequence ($b_{t,[A,C1,C2,B]}$ or $b_{p,[A,C1,C2,B]}$) being shared with the other nodes. In most cases, in particular if the nodes use the two modulation modalities to simultaneously and independently of each other establish shared secrets between two sets of nodes at a time, the sets of bit sequences may be different from each other. In some cases, however, the same set of bit sequences may be used for both modulation modalities. Following polarization modulation, the resulting qubit undergoes further manipulation in Alice's calibration box 9, designed to pre-compensate for any undesired polarization rotations that may occur within the quantum channel (optical fiber). This box performs any necessary polarization rotations such to guarantee that the next player receives the exact $\psi_{\theta_A}$. This calibration can be performed offline. Once calibrated, the qubit is then transmitted to Charlie 1 to continue its trajectory within the Qline.

Within Charlie 1, the phase is shifted, and the polarization rotated. At the output of Charlie 1's polarization controller, the qubit can be described as:

$$\psi_{\theta_{C1}} = \left[\!\left[\frac{1}{\sqrt{2}}\left(|S\rangle + e^{j(\phi_A + \phi_{C1})}|L\rangle\right)\right]\!\right] \cup \left[\!\left[\left(\cos(\theta_A + \theta_{C1})|H\rangle + \sin(\theta_A + \theta_{C1})|V\rangle\right)\right]\!\right] \tag{7}$$

where, analogously to Alice, $\phi_{C1} = \pi\left(\frac{b_{t,C1}}{2} + s_{t,C1}\right)$ and $\theta_{C1} = \frac{\pi}{2}\cdot\left(\frac{b_{p,C1}}{2} + s_{p,C1}\right)$.

The same logic is applied to Charlie 2, that is, at the output of Charlie 2's polarization controller, the qubit can be described as:

$$\psi_{\theta_{C2}} = \left[\!\left[\frac{1}{\sqrt{2}}\left(|S\rangle + e^{j(\phi_A + \phi_{C1} + \phi_{C2})}|L\rangle\right)\right]\!\right] \cup$$

$$[(\cos(\theta_A + \theta_{C1} + \theta_{C2})|H\rangle + \sin(\theta_A + \theta_{C1} + \theta_{C2})|V\rangle)] \tag{8}$$

Upon reaching Bob, the qubit undergoes basis selection before its final measurement is executed. To perform this selection, Bob applies a polarization rotation denoted as $\theta_B$. This rotation is set to either 0 (representing the linear basis) or $\pi/4$ (representing the diagonal basis), that is:

$$\theta_B = \pi\left(\frac{b_{p,B}}{4}\right), \tag{9}$$

where $b_{p,B}$ is a binary random bit. Then, the qubit is fed to a phase shifter $\phi_B$. This phase shift is set to either 0 or $\dfrac{\pi}{2}$, that is:

$$\phi_B = \pi\left(\frac{b_{t,B}}{2}\right), \tag{10}$$

where $b_{t,B}$ is a binary random bit. At this point, the qubit can be described as:

$$\psi_{\theta_B} = \left[\frac{1}{\sqrt{2}}\left(|S\rangle + e^{j(\phi_A + \phi_{C1} + \phi_{C2} + \phi_B)}|L\rangle\right)\right] \cup$$

$$[(\cos(\theta_A + \theta_{C1} + \theta_{C2} + \theta_B)|H\rangle + \sin(\theta_A + \theta_{C1} + \theta_{C2} + \theta_B)|V\rangle)] \tag{11}$$

The qubit $\psi_{\phi_B}$ is fed to a Mach-Zehnder interferometer (MZI) 2b. At the output I and II of the MZI (Figure 1), the $|S\rangle$ and the $|L\rangle$ timebins interfere. The detection probability at the output ports I and II are respectively:

$$I_1 = \sin^2\left(\frac{\phi_A + \phi_{C1} + \phi_{C2} + \phi_B}{2}\right), \tag{12}$$

$$I_2 = \cos^2\left(\frac{\phi_A + \phi_{C1} + \phi_{C2} + \phi_B}{2}\right), \tag{13}$$

If $b_{t,A} \oplus b_{t,C1} \oplus b_{t,C2} \oplus b_{t,B} \neq 0$ ($\oplus$: exclusive or), it means that $\phi_A + \phi_{C1} + \phi_{C2} + \phi_B$ can be expressed as $n\pi/2$, where $n$ is an odd number. Then, $I_1 = I_2 = 1/2$, resulting in inconclusive measurements, i.e., it is not possible to determine with 100% probability if the photons (weak pulse) exclusively leave port I or port II.

If $b_{t,A} \oplus b_{t,C1} \oplus b_{t,C2} \oplus b_{t,B} = 0$, it means that $\phi_A + \phi_{C1} + \phi_{C2} + \phi_B$ can be expressed as $n\pi/2$, where $n$ is an even number. Then, $I_1 = 0$ or 1 and $I_2 = 1$ or 0, resulting in conclusive measurements. Therefore, the qubit (weak pulse) exclusively leaves the MZI through output port I ($I_1 = 1$, $I_2 = 0$) or through output port II ($I_1 = 0$, $I_2 = 1$).

Interestingly, at least in the basis matching case, i.e., $b_{t,A} \oplus b_{t,C1} \oplus b_{t,C2} \oplus b_{t,B} = 0$, when the photons (weak pulse) exclusively leave the MZI through port I or through port II, the polarization-encoding is not changed and can be measured. For purpose of illustration, it is assumed that the photons (weak pulse) exclusively leave the MZI through port I ($I_1 = 1$, $I_2 = 0$). Therefore:

$$I_{D1-H} = \cos^2(\theta_A + \theta_{C1} + \theta_{C2} + \theta_B), \tag{14}$$

$$I_{D1-V} = \sin^2(\theta_A + \theta_{C1} + \theta_{C2} + \theta_B), \tag{15}$$

where $I_{D1-H}$ and $I_{D1-V}$ are the detection probabilities at detectors D1-H and D1-V.

If $b_{p,A} \oplus b_{p,C1} \oplus b_{p,C2} \oplus b_{p,B} \neq 0$, it means that $\theta_A + \theta_{C1} + \theta_{C2} + \theta_B$ can be expressed as $n\pi/4$, where $n$ is an odd number. Then, $I_{D1-H} = I_{D1-V} = 1/2$, resulting in inconclusive measurements, i.e., the qubit (weak pulse) cannot be exclusively detected at D1-H or D1-V.

If $b_{p,A} \oplus b_{p,C1} \oplus b_{p,C2} \oplus b_{p,B} = 0$, it means that $\theta_A + \theta_{C1} + \theta_{C2} + \theta_B$ can be expressed as $n\pi/4$, where $n$ is an even number. Then, $I_{D1-H} = 0$ *or* 1 and $I_{D1-V} = 1$ *or* 0, resulting in conclusive measurements. Therefore, the qubit will either click D1-H ($I_{D1-H} = 1$, $I_{D1-V} = 0$) or D1-V ($I_{D1-V} = 0$, $I_{D1-H} = 1$).

In summary, the control circuitry of the receiver node (Bob) is configured to measure the sequence of qubits according to a first measuring basis for the first measuring modality, and according to a second measuring basis for the second measuring modality. The respective measuring basis may be selected by applying a respective polarization rotation (using polarization controller 10) and by applying a respective phase shift (using phase modulator 4) according to the bits output by the respective QRNG 10, 5. For example, the polarization rotation may be applied before applying the phase shift.

According to the original Qline protocol, only the cases when there is a basis matching, i.e., $b_{t,A} \oplus b_{t,C1} \oplus b_{t,C2} \oplus b_{t,B}$ = 0, are used for the sifting the key. Thus, Qubits that are measured according to a measuring basis that matches a basis of the respective measuring modality, i.e., that result in $b_{t,A} \oplus b_{p,C1} \oplus b_{t,C2} \oplus b_{t,B} = 0$ and/or $b_{p,A} \oplus b_{p,C1} \oplus b_{p,C2} \oplus b_{p,B} = 0$ contribute to at least one output bit sequence (being based on conclusive measurements only) of the receiver node. The control circuitry may provide information on the qubits having been measured using a matching measuring basis to the other nodes of the quantum key distribution network (via the classical, non-quantum channel), and to use the information on the qubits having been measured using a matching measuring basis to determine the shared secret. In other words, the other nodes may be informed about which qubits have been measured conclusively. Only bits that were used for modulating these qubits might be used for establishing the shared secret, i.e., for determining the sifted key of the respective other node. Optionally, the at least one output bit sequence may be used for determining the shared secret as well.

As discussed in connection with Figs. 2d and 2e, for two parties to establish a shared key (shared secret), it suffices for the other two to disclose their keys. For example, when Charlie 2 intends to uncover Alice's secret key, Charlie 1 and Bob are required to reveal their secret keys, respectively. In the newly proposed scheme, the same logic can be applied to the polarization degree of freedom, i.e., whenever $b_{p,A} \oplus b_{p,C1} \oplus b_{pC2} \oplus b_{p,B} = 0$, a key can be established between two arbitrary players within the Qline.

A notable advantage of the proposed scheme lies in the independent modulation of polarization and timebin encoding. As a result, the basis matching conditions operate independently as well. This implies that even if the basis matching condition is not met in the timebin domain, if it holds true for polarization, information exchange can still occur, and vice-versa. For instance, assuming the case when $b_{t,A} \oplus b_{t,C1} \oplus b_{t,C2} \oplus b_{t,B} \neq 0$ and $b_{p,A} \oplus b_{p,C1} \oplus b_{pC2} \oplus b_{p,B} = 0$. Given the first basis matching condition, it is not possible to determine whether the photons (weak pulse) will exclusively leave port I or port II of the MZI. However, given that $b_{p,A} \oplus b_{p,C1} \oplus b_{pC2} \oplus b_{p,B} = 0$, it is possible to predict if the photons (weak pulse) will exclusively click the H or the V detector. In summary, given that a qubit can be modulated in the polarization and phase, at the same time, the Qline protocol can be independently and simultaneously executed in these two degrees of freedom.

Establishing the shared secret, e.g., determining the sifted key of the respective other node, is performed similar to the procedure outlined in connection with Figs. 2a and 2b. If a qubit has been measured using a matching measuring basis, the receiver node (Bob) notifies the other nodes that the qubit has been conclusively measured and that the qubit is to be used for key sifting. Thus, for nodes other than the receiver node, the control circuitry is configured to obtain information on the qubits having been measured using a matching measuring basis from the receiver node via a non-quantum communication channel (the classical channel), and to determine the shared secret based on the information on the qubits having been measured using a matching measuring basis. If the node is the receiver node, the control circuitry may be configured to provide the information on the qubits having been measured using a matching measuring basis to the remaining nodes via the non-quantum communication channel. All of the nodes announce their public bits (i.e., at least the relevant bits of the public bit sequence). In addition, all of the nodes except for the pair of nodes established the secret key share their sifted key(s) or private bits (i.e., at least the relevant bits of the private bit sequence). The control circuitry of the node being tasked with establishing the shared secret may be configured to determine the shared secret between the node and the second node (i.e., with the node and the second node being an arbitrary pair of two nodes of the nodes of the quantum key distribution network, between which the shared secret is established) based on the public bit sequences of the other nodes of the quantum key distribution network, and based on the sifted keys or private keys of the other nodes (other than the node and the second node) and based on the private key/sifted key of the node. For example, if public bit sequences (of all nodes) or private bit sequences/sifted keys (of the other nodes) are announced/shared, this is done via a non-quantum channel (the classical channel). Thus, the control circuitry may be configured to obtain bit sequences from other nodes of the quantum key distribution via a non-quantum communication channel, and to determine the shared secret based on the bit sequences obtained from the other nodes.

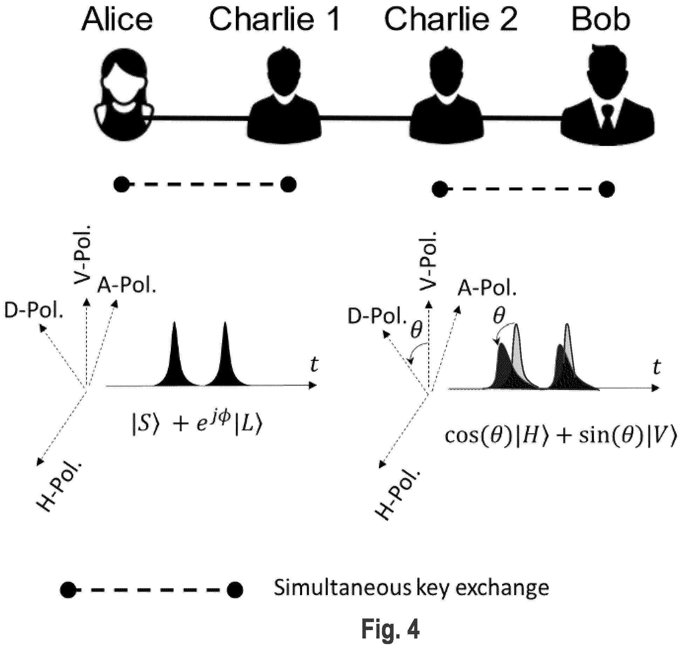

A direct consequence of this feature is the possibility to use the same sequence of photons for simultaneously and independently modulating two secret keys, one in the polarization and the other in the timebin domain. The first secret key, for instance, can be used in the exchange of cryptographic material between Alice - Charlie 1 (using Qline with timebin encoding), and the second key for Charlie 2 -Bob (using Qline in polarization encoding) as depicted in Fig. 4.

Fig. 4 illustrates the simultaneous use of two modulation modalities for independently generating two secret keys. In particular, two secret keys are independently generated and simultaneously used with same sequence of photons. The first secret key (between Alice and Charlie 1) is modulated in the timebin domain while the second secret key (between Charlie 2 and Bob) is modulated using polarization encoding. Thus, the nodes may be configured to use the two modulation modalities to simultaneously and independently of each other establish shared secrets between two sets of nodes (Alice and Charlie 1, Charlie 2, and Bob, respectively, in Fig. 4) at a time. The proposed concept may provide a system and method for simultaneous multi-partner quantum-key exchange using polarization and timebin encoding with the Qline architecture.

In practice, this can be implemented, as shown in Fig. 3, by using two independent QRNG to generate different bit sequences for controlling the phase modulator 4 and for controlling the polarization controller 10. In other words, the control circuitry may be configured to control the first modulation circuitry (the phase controller) to modulate the sequence of qubits (using timebin encoding) based on a first bit sequence or first set of bit sequences ($b_{t,[A,C1,C2,B]}$ and $s_{t,[A,C1,C2,B]}$ as described in connection with Fig. 3) and to control the second modulation circuitry (the polarization controller) to modulate the sequence of qubits based on a second bit sequence or second set of bit sequences ($b_{p,[A,C1,C2,B]}$ and $s_{p,[A,C1,C2,B]}$ as described in connection with Fig. 3) being different from the first bit sequence or first set of bit sequences. The control circuitry may be configured to determine the shared secret between the node and the other node, depending on which of the two modalities is used for establishing the shared secret between the respective pair of nodes, based on the first bit sequence or first set of bit sequences or based on the second bit sequence or second set of bit sequences. In some examples, the two pairs of nodes may be entirely independent of each other, i.e., the nodes of the first pair of nodes may be different from the nodes of the second pair of nodes. Alternatively, one of the nodes may be part of both pairs of nodes (e.g., to simultaneously establish a shared secret between Alice and Charlie 1 and between Alice and Charlie 2).

Another application for this scheme concerns the increase of the secret key rate. If one pair uses both modulation schemes to exchange cryptographic material, then, it is possible to increase the secret key rate by a factor of 2. Thus, the nodes may be configured to use the two modulation modalities to establish a single shared secret between two nodes at a time. For example, the two modulation modalities may be used to decrease a number of qubits required to arrive at a pre-defined number of qubits measured using a matching measuring basis. For example, if two nodes (e.g., Alice and Chalie 2) establish a shared secret, the two nodes may exchange the secret using timebin and polarization encoding. For example, half of the shared secret may be established using polarization encoding, and the other half of the shared secret may be established using timebin encoding, effectively halving the number of qubits required per modulation modality. In this case, as in the example directed at simultaneously establishing multiple shared secrets, two different bit sequences or sets of bit sequences may be used. Alternatively, the same bit sequence or set of bit sequences may be used for controlling the phase modulator and the polarization controller, and the respective bit being used to modulate the qubit may be used if either of the modulation modalities is measured with the matching measuring basis. In other words, the control circuitry may be configured to control the first modulation circuitry and the second modulation sequence to modulate the sequence of qubits based on the same bit sequence or same set of bit sequences.

The proposed concept may be embodied by a method as well. Fig. 5 shows a flow chart of a method for a node of a quantum key distribution network, e.g., as shown in connection with Figs. 2a to 2e and Fig. 3. Features discussed in connection with the quantum key distribution network and its nodes may likewise be included in the corresponding method of Fig. 5. The method comprises modulating 13 a sequence of qubits being transmitted from the transmitter node to the receiver node via the one or more intermediate nodes of the quantum key distribution network using a first modulation modality and a second modulation modality based on at least one bit sequence. The method comprises determining 14 a shared secret between the node and a second node of the quantum key distribution network based on the at least one bit sequence.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**List of reference signs**

| | |
|---|---|
| 1 | Laser |
| 2a | Amplitude modulator |
| 2b | Mach-Zehnder Interferometer |
| 3 | Polarization controller, waveplate |

| 4 | Phase modulator |
|---|---|
| 5 | Quantum Random Number Generator |
| 6 | Field-Programmable Gate Array |
| 7 | Server |
| 8 | Classical/conventional non-quantum channel |
| 9 | Calibration device/box |
| 10 | Polarization Controller |
| 11 | Quantum Random Number Generator |
| 12a, 12b | Polarization beam splitters |
| 13 | Modulating a sequence of qubits using a first and second modulation modality |
| 14 | Determining a shared secret |

**Claims**

**1.** A node (Alice, Charlie 1, Charlie 2, Bob) for a quantum key distribution network, the quantum key distribution network comprising a transmitter node (Alice), one or more intermediate nodes (Charlie 1, Charlie 2) and a receiver node (Bob), the node comprising:

first modulation circuitry (4) for modulating qubits using a first modulation modality;
second modulation circuitry (10) for modulating the qubits using a second modulation modality; and
control circuitry (5, 6, 7, 11) configured to control the first modulation circuitry and the second modulation circuitry to modulate a sequence of qubits being transmitted from the transmitter node to the receiver node via the one or more intermediate nodes of the quantum key distribution network based on at least one bit sequence,
wherein the control circuitry is configured to determine a shared secret between the node and a second node of the quantum key distribution network based on the at least one bit sequence.

**2.** The node according to claim 1, wherein the control circuitry is configured to control the first modulation circuitry to modulate the sequence of qubits based on a first bit sequence or first set of bit sequences and to control the second modulation circuitry to modulate the sequence of qubits based on a second bit sequence or second set of bit sequences being different from the first bit sequence or first set of bit sequences, and to determine the shared secret between the node and the other node based on the first bit sequence or first set of bit sequences or based on the second bit sequence or second set of bit sequences.

**3.** The node according to claim 1, wherein the control circuitry is configured to control the first modulation circuitry and the second modulation sequence to modulate the sequence of qubits based on the same bit sequence or same set of bit sequences.

**5.** The node according to one of the claims 1 to 4, wherein the control circuitry is configured to control the first modulation circuitry and the second modulation circuitry to modulate the sequence of qubits based on at least one set of bit sequences, with each set of bit sequences comprising a private bit sequence being private to the node and a public bit sequence being shared with the other nodes.

**6.** The node according to claim 5, wherein the control circuitry is configured to determine the shared secret between the node and the second node based on the public bit sequences of the other nodes of the quantum key distribution network.

**7.** The node according to one of the claims 1 to 6, wherein the control circuitry is configured to obtain bit sequences from other nodes of the quantum key distribution via a non-quantum communication channel, and to determine the shared secret based on the bit sequences obtained from the other nodes, and/or wherein the control circuitry is configured to obtain information on the qubits having been measured using a matching measuring basis from the receiver node via the non-quantum communication channel, and to determine the shared secret based on the information on the qubits having been measured using a matching measuring basis.

**8.** The node according to one of the claims 1 to 7, wherein the first modulation modality is time-bin modulation, and the second modulation modality is polarization modulation.

**9.** The node according to one of the claims 1 to 8, wherein the quantum key distribution network is a quantum key distribution network according to the Qline protocol.

**10.** The node according to one of the claims 1 to 9, wherein the node is an intermediate node (Charlie 1, Charlie 2) of the quantum key distribution network, wherein optionally the intermediate node is configured to modulate the qubits as the qubits are transmitted from the transmitter node to the receiver node without measuring the qubits.

**11.** The node according to one of the claims 1 to 9, wherein the node is the transmitter node of the quantum key distribution network, wherein the node comprises qubit generation circuitry to generate the sequence of qubits.

**12.** The node according to one of the claims 1 to 9, wherein the node is the receiver node of the quantum key distribution network, wherein the node comprises measuring circuitry for measuring the sequence of qubits according to the two modulation modalities, wherein the control circuitry is configured to control the measuring circuitry to measure the sequence of qubits according to a first measuring basis for the first measuring modality and according to a second measuring basis for the second measuring modality, wherein qubits measured according to a measuring basis that matches a basis of the respective measuring modality contribute to at least one output bit sequence of the receiver node, wherein the control circuitry is configured to provide information on the qubits having been measured using a matching measuring basis to the other nodes of the quantum key distribution network, and to use the information on the qubits having been measured using a matching measuring basis to determine the shared secret.

**13.** A system comprising a plurality of nodes (Alice, Charlie 1, Charlie 2, Bob) according to one of the claims 1 to 12, wherein one of the nodes is a transmitter node (Alice), one of the nodes is a receiver node (Bob) and one or more nodes are intermediate nodes (Charlie 1, Charlie 2) of the quantum key distribution network, wherein the transmitter node is configured to transmit a sequence of qubits to the receiver node via the one or more intermediate nodes of the quantum key distribution network, and wherein the nodes are configured to modulate the sequence of qubits using two modulation modalities (4, 10).

**14.** The system according to claim 13, wherein the nodes are configured to use the two modulation modalities to simultaneously and independently of each other establish shared secrets between two sets of nodes at a time, or wherein the nodes are configured to use the two modulation modalities to establish a single shared secret between two nodes at a time, wherein the two modulation modalities are used to decrease a number of qubits required to arrive at a pre-defined number of qubits measured using a matching measuring basis.

**15.** A method for a node of a quantum key distribution network, the quantum key distribution network comprising a transmitter node (Alice), one or more intermediate nodes (Charlie 1, Charlie 2) and a receiver node (Bob), wherein the method comprises:

modulating (13) a sequence of qubits being transmitted from the transmitter node to the receiver node via the one or more intermediate nodes of the quantum key distribution network using a first modulation modality and a second modulation modality based on at least one bit sequence, and
determining (14) a shared secret between the node and a second node of the quantum key distribution network based on the at least one bit sequence.

**Amended claims in accordance with Rule 137(2) EPC.**

1. A node (Alice, Charlie 1, Charlie 2, Bob) for a quantum key distribution network, the quantum key distribution network comprising a transmitter node (Alice), one or more intermediate nodes (Charlie 1, Charlie 2) and a receiver node (Bob), the node comprising:

first modulation circuitry (4) for modulating qubits using a first modulation modality;
second modulation circuitry (10) for modulating the qubits using a second modulation modality; and
control circuitry (5, 6, 7, 11) configured to control the first modulation circuitry and the second modulation circuitry to modulate a sequence of qubits being transmitted from the transmitter node to the receiver node via the one or more intermediate nodes of the quantum key distribution network based on at least one bit sequence,
wherein the control circuitry is configured to determine a shared secret between the node and a second node of the quantum key distribution network based on the at least one bit sequence,
wherein the control circuitry is configured to control the first modulation circuitry to modulate the sequence of qubits based on a first bit sequence or first set of bit sequences and to control the second modulation circuitry to modulate the sequence of qubits based on a second bit sequence or second set of bit sequences being different from the first bit sequence or first set of bit sequences,
and to determine the shared secret between the node and the other node either based on the first bit sequence or first set of bit sequences or based on the second bit sequence or second set of bit sequences.

2. The node according to claim 1, wherein the control circuitry is configured to control the first modulation circuitry and the second modulation circuitry to modulate the sequence of qubits based on at least one set of bit sequences, with each set of bit sequences comprising a private bit sequence being private to the node and a public bit sequence being shared with the other nodes.

3. The node according to claim 2, wherein the control circuitry is configured to determine the shared secret between the node and the second node based on the public bit sequences of the other nodes of the quantum key distribution network.

4. The node according to one of the claims 1 to 3, wherein the control circuitry is configured to obtain bit sequences from other nodes of the quantum key distribution via a non-quantum communication channel, and to determine the shared secret based on the bit sequences obtained from the other nodes.

5. The node according to one of the claims 1 to 4, wherein the control circuitry is configured to obtain information on the qubits having been measured using a matching measuring basis from the receiver node via the non-quantum communication channel, and to determine the shared secret based on the information on the qubits having been measured using a matching measuring basis.

6. The node according to one of the claims 1 to 5, wherein the first modulation modality is time-bin modulation, and the second modulation modality is polarization modulation.

7. The node according to one of the claims 1 to 6, wherein the quantum key distribution network is a quantum key distribution network according to the Qline protocol.

8. The node according to one of the claims 1 to 7, wherein the node is an intermediate node (Charlie 1, Charlie 2) of the quantum key distribution network, wherein optionally the intermediate node is configured to modulate the qubits as the qubits are transmitted from the transmitter node to the receiver node without measuring the qubits.

9. The node according to one of the claims 1 to 8, wherein the node is the transmitter node of the quantum key distribution network, wherein the node comprises qubit generation circuitry to generate the sequence of qubits.

10. The node according to one of the claims 1 to 8, wherein the node is the receiver node of the quantum key distribution network, wherein the node comprises measuring circuitry for measuring the sequence of qubits according to the two modulation modalities, wherein the control circuitry is configured to control the measuring circuitry to measure the sequence of qubits according to a first measuring basis for the first measuring modality and according to a second measuring basis for the second measuring modality, wherein qubits measured according to a measuring basis that matches a basis of the respective measuring modality contribute to at least one output bit sequence of the receiver node, wherein the control circuitry is configured to provide information on the qubits having been measured using a matching measuring basis to the other nodes of the quantum key distribution network, and to use the information on the qubits having been measured using a matching measuring basis to determine the shared secret.

11. A system comprising a plurality of nodes (Alice, Charlie 1, Charlie 2, Bob) according to one of the claims 1 to 10, wherein one of the nodes is a transmitter node (Alice), one of the nodes is a receiver node (Bob) and one or more nodes are intermediate nodes (Charlie 1, Charlie 2) of the quantum key distribution network, wherein the transmitter node is configured to transmit a sequence of qubits to the receiver node via the one or more intermediate nodes of the quantum key distribution network, and wherein the nodes are configured to modulate the sequence of qubits using two modulation modalities (4, 10), wherein the nodes are configured to use the two modulation modalities to simultaneously and independently of each other establish shared secrets between two sets of nodes at a time.

12. A method for a node of a quantum key distribution network, the quantum key distribution network comprising a transmitter node (Alice), one or more intermediate nodes (Charlie 1, Charlie 2) and a receiver node (Bob), wherein the method comprises:

modulating (13) a sequence of qubits being transmitted from the transmitter node to the receiver node via the one or more intermediate nodes of the quantum key distribution network using a first modulation modality based on a first bit sequence or first set of bit sequences and a second modulation modality based on a second bit sequence or second set of bit sequences being different from the first bit sequence or first set of bit sequences, and determining (14) a shared secret between the node and a second node of the quantum key distribution network either based on the first bit sequence or first set of bit sequences or based on the second bit sequence or second set of bit sequences.

AM

Laser

$V(t)$

1 2a

$|S\rangle$ $|L\rangle$

$t$

## Fig. 1a

MZI

L

Laser

BS

$a_1$ $b_1$

$a_2$ S $b_2$

1

2b

$|S\rangle$ $|L\rangle$

$t$

## Fig. 1b

Laser

H

$\gamma$

$\gamma$: rotation angle

1 3

## Fig. 1c

| Modulating a sequence of qubits using a first and a second modulation modality |
|---|

13

| Determining a shared secret |
|---|

14

## Fig. 5

Fig. 2a

**Fig. 2b**

Fig. 2c

Fig. 2d

Charlie 2 calculates... $0 \oplus 1 \oplus 1 \oplus K_B = 0$          Bob calculates... $0 \oplus 1 \oplus K_{C2} \oplus 0 = 0$

Charlie 2 discovers Bob's sifted key... $K_B = 0$          Bob discovers Charlie 2's sifted key... $K_{C2} = 1$

**Fig. 2e**

**Fig. 3**

EP 4 686 140 A1

Fig. 4

Europäisches
Patentamt
European
Patent Office
Office européen
des brevets

# EUROPEAN SEARCH REPORT

**Application Number**

EP 24 19 0968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MINA DOOSTI ET AL: "Establishing shared secret keys on quantum line networks: protocol and security", ARXIV.ORG, CORNELL UNIVERSITY LIBRARY, 201 OLIN LIBRARY CORNELL UNIVERSITY ITHACA, NY 14853, 4 April 2023 (2023-04-04), XP091477155, * Sections 1-3 * | 1-3,5-15 | INV. H04L9/08 |
| Y | CN 208 337 595 U (QUANTUMCTEK CO LTD) 4 January 2019 (2019-01-04) * See passages from the translation repeated in the European Search Opinion * | 1-3,5-15 | |
| Y | CN 111 756 526 B (QUANTUMCTEK CO LTD) 16 September 2022 (2022-09-16) * See passages from the translation repeated in the European Search Opinion * | 1-3,5-15 | |

**TECHNICAL FIELDS SEARCHED (IPC)**

H04L

The present search report has been drawn up for all claims

| Place of search | Date of completion of the search | Examiner |
|---|---|---|
| Munich | 7 January 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 0968

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | Publication date | Patent family member(s) | Publication date |
|---|---|---|---|
| CN 208337595 U | 04-01-2019 | NONE | |
| CN 111756526 B | 16-09-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. H. BENNETT** ; **G. BRASSARD**. Quantum cryptography: Public key distribution and coin tossing. *Proceedings of IEEE International Conference on Computers, Systems and Signal Processing*, 1984, vol. 175, 8

- **M. DOOSTI et al.** Establishing shared secret keys on quantum line networks: protocol and security. *arXiv:2304.01881*, 2023